# EUROPEAN PATENT SPECIFICATION

(11) **EP 2 300 670 B1**
(45) Date of publication and mention of the grant of the patent: **08.05.2019**
(21) Application number: 09754124.7
(22) Date of filing: 29.05.2009
(51) Int. Cl.: E03F 5/04, F16B 37/00

(54) **IMPROVED WASTE TRAP**
VERBESSERTER SIPHON
SIPHON PERFECTIONNÉ

(30) Priority: 30.05.2008 GB 0809796
(43) Date of publication of application: 30.03.2011
(73) Proprietor: Mcalpine & Company Limited, Glasgow G52 4LF (GB)
(72) Inventor: MCALPINE, James, Kenneth, Hillington Glasgow G52 4LF (GB)
(74) Representative: Gibbs, Richard
(86) International application number: PCT/GB2009/001366
(87) International publication number: WO 2009/144479

(56) References cited:
- EP-A- 1 674 629
- WO-A1-99/51824
- FR-A- 2 283 623
- FR-A- 2 902 120
- FR-A1- 2 333 905

## Description

### Field of the Invention

The present invention relates to a waste trap for a bath or a shower.

### Background to the Invention

Shower cubicles are commonplace in the homes in the United Kingdom and recently there has been a trend to install power assisted showers in which high volumes of water pass through the showerhead in a short space of time. The waste water generated in a shower leaves the shower tray through an outlet and passes through a waste trap before entering the sewage system. The shower waste trap is arranged to utilise some of the waste water to form a water seal between the trap inlet and the trap outlet, thereby providing a barrier between the sewage system and the shower cubicle.

FR 2 283 623 (Passavant) discloses a waste trap according to the preamble of claim 1, and in particular describes a drainage device for a room such as a bathroom or kitchen. A grill is supported by a funnel which has internal stiffening ribs and which is screwed into a collar. The collar supports a sealing ring engaging the underside of the floor panels and has an outer radial flange bolted to the top face of a discharge duct. There are seals between the flange and the discharge duct has an integral partition forming a U bend. The grill and funnel may be easily removed for cleaning of the discharge duct.

FR 2 333 905 (Chantrieux) describes a floor gulley for draining e.g. shower or bathing pool areas. The floor gulley includes a removable siphon pot. The pot houses a coaxial inlet pipe to form the siphon, and can be removed from above or below depending on the gully design. No tool is required to effect siphon pot removal, and in all cases the top of the siphon pot locates above the gulley pot outlet pipe. In the case of the siphon pot which is removed from above, it is integrated with the inlet pipe and grating, and the assembly is simply lifted out. The gulley may comprise a gulley pot with the top opening formed by a slideably adjustable flanged sleeve. The inlet pipe has a flared mouth with edge seals to the sleeve wall, and is supported on the siphon pot by a radial plate.

WO 99/51824 (Knight) describes a waste outlet having a clamping ring which seats a flared filler tube. The tube directs water into a well in which the water rises and overflows into the bowl of the outlet. The filler tube contains a solids filter disc which is connected to the filler tube. When the cover is removed, the tube and the disc are removable as a pair. The disc cleans the well as it is retracted. The disc drops clear of the tube allowing the disc to be cleaned before re-insertion.

The European Standard for a shower trap requires that a 24 litre per minute throughput is achievable with a 15mm head. However, the power showers entering the market can deliver more than twice this amount of water.

To compound the problem for the trap designer, there is also the desire to reduce the height of the shower tray to bring it as close to flush with the floor surrounding the shower tray as possible, thereby reducing the space available for fitting a trap beneath the shower tray.

### Summary of the Invention

According to the invention, a waste trap is provided according to claim 1. Preferred embodiments of the invention are defined in the dependent claims.

Having the at least one body wall spaced away from the housing inlet permits the walls of the body to be offset from the inlet increasing the body volume and the throughput achievable through the trap.

In one embodiment, the threaded sleeve can extend below the housing inlet threaded surface. As the housing body is spaced away from the housing inlet, the sleeve can extend into the volume defined by the housing without the need for there to be sufficient turns of the housing inlet thread to accommodate the sleeve thread. Such an arrangement allows the number of turns which make up the threaded connection, and particularly the housing inlet thread, to be minimised, making it easier to tighten or loosen the sleeve with respect to the housing.

In one embodiment, the housing inlet surface thread defines less than 7 turns.

The entire housing inlet surface may be threaded.

Preferably, the housing inlet is defined by an annular ring.

Preferably, the annular ring is connected to the housing body.

Preferably, the annular ring is spin welded to the housing body.

Alternatively or additionally the annular ring is attached to the housing body by adhesive, a clip fit or an interference fit or the like.

Preferably, the annular ring is attached to a top surface of the/each housing body wall.

In use, a bath or shower outlet is received between the annular ring and the sleeve flange.

Preferably, the housing inlet is adapted to receive a filter device. The filter device may be a grill.

Preferably, the housing outlet is defined by the housing body.

Most preferably, the housing outlet is defined by the housing body wall. Having the housing body wall spaced away from the housing inlet allows a larger housing outlet to be accommodated, increasing the output achievable from the waste trap.

In one embodiment, the threaded sleeve can extend into the housing body such that a portion of the threaded sleeve is below a portion of the housing outlet.

The trap defines a convoluted flow path. A convoluted flow path allows the formation of a water seal between the inlet and the outlet.

According to the invention, the trap comprises an insert, the insert defining the convoluted flow path.

According to the invention, the insert is removable through the housing inlet. Providing an insert which is removable through the housing inlet facilitates cleaning of the waste trap.

According to the invention, the insert comprises an inner tubular portion and an outer tubular portion. Tubular in this context is not intended to be limited to circular cross-section. The cross-section of the tubular portions could be square, pentagonal, hexagonal etc.

The tubular portions are being arranged concentrically. In use, a water seal is provided between the tubular portions.

Preferably, the insert is substantially rigid.

Preferably, the insert is adapted to be removed through the inlet without deformation.

According to the invention, the outer tubular portion is arranged in contact with, an internal surface of the sleeve. Such an arrangement maximises the volume of the outer tubular portion.

In an embodiment, the outer tubular portion may be trapped between the inner tubular portion and the internal surface of the sleeve.

The insert defines at least one opening for permitting waste water to exit the insert.

The outer tubular portion defines the at least one opening.

The openings may be apertures.

Alternatively, the openings may be castellations.

Preferably, the insert is releasably attachable to the sleeve internal surface.

Preferably, the insert is sealingly attachable to the sleeve internal surface.

According to the invention, the outer tubular portion rests on a bottom surface of the body.

Where the outer tubular portion defines apertures or castellations or other openings, the openings are defined by an upper portion of the outer tubular portion such that when the level of waste fluid reaches the openings the waste fluid can flow through the openings and towards the housing body exit. This arrangement permits the cross-sectional area of the insert to be maximised as the insert can be sized to fit against the sleeve internal surface, obviating the need for an annular gap to be left between the insert and the sleeve.

Preferably, the insert comprises a cup, the cup having a wall, the wall defining the outer tubular portion.

The cup may be suspended from the sleeve.

Preferably, the housing inlet surface defines a maximum inlet diameter and a portion of the housing body defines a body diameter, the maximum inlet diameter being less than the body diameter.

The trap may further comprising an outlet nut adapted to engage an thread defined by the trap outlet.

In one embodiment, the outlet nut comprises a body portion having an internal surface which is at least partially threaded; and a gripping portion, the gripping portion being defined by at least one castellation extending from an end surface of the nut.

In one embodiment the nut has a cylindrical external surface.

Preferably, the cylindrical external surface defines a nut radius.

Preferably, the at least one castellation does not extend radially beyond the nut radius.

Preferably, the maximum radial extension of the at least one castellation equals the nut radius.

Preferably, there are a plurality of castellations.

Preferably, the castellations are square.

In one embodiment, the gripping portion defines at least one gripping surface.

The/each gripping surface may be roughened.

Preferably, the castellations are spaced such that a user's finger can fit between adjacent castellations.

In one embodiment, the width of the gap between adjacent castellations is greater than the width of the castellations.

The internal threaded surface may be partially defined by the gripping portion internal surface.

### Brief Description of the Drawings

Embodiments of the present invention will now be described with reference to the accompanying drawings in which:
Figure 1 is a section view through a waste trap according to a first embodiment of the present invention;
Figure 2 is a side view of the cup of Figure 1;
Figure 3 is a perspective view of the outlet nut of Figure 1; and
Figure 4 is a section view through a waste trap according to a second embodiment not forming part of the present invention.

### Detailed Description of the Drawings

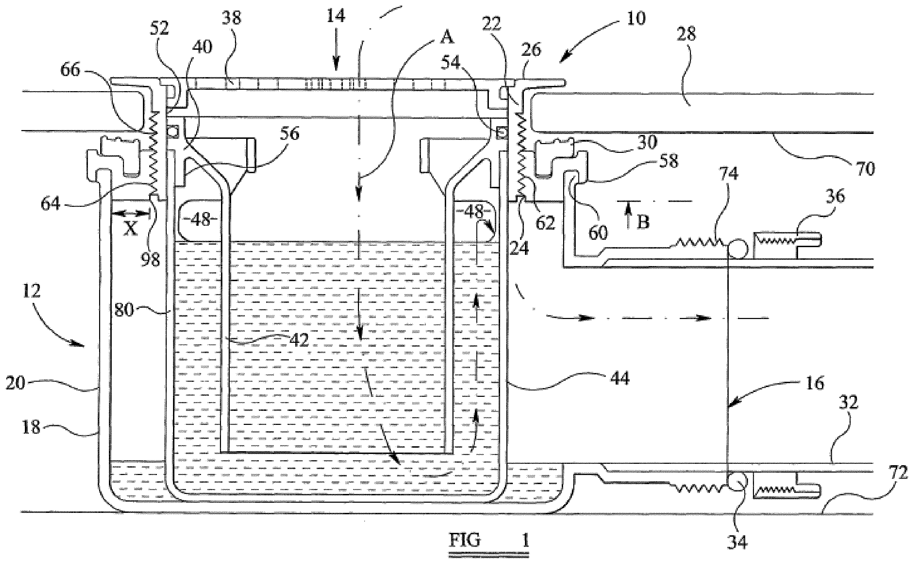

Figure 1 is a section view through a waste trap, generally indicated by reference numeral 10, according to a first embodiment of the present invention. The waste trap 10 is shown located between a shower tray 28 and a soil pipe 32, and is adapted to provide a water seal between the tray 28 and the soil pipe 32 to prevent the backflow of gases from the soil pipe 32.

The waste trap 10 comprises a housing 12, the housing 12 having an inlet 14, an outlet 16 and a body 18 having a cylindrical wall 20. The trap 10 further comprises a threaded sleeve 22, the sleeve 22 being threadedly engageable with a housing inlet surface 24. Particularly, a sleeve thread 66 is releasably connected to an inlet surface thread 64.

The sleeve 22 defines a flange 26, the flange 26 and the housing 12 being arranged to trap the outlet of a shower tray 28 and an annular seal 30 therebetween. The seal 30 is provided to prevent leakage of waste water from the shower tray 28 leaking between the shower tray 28 and the trap 10.

As can be seen from Figure 1, the body wall 20 is spaced away from the housing inlet surface 24 by a distance "X".

The housing inlet 24 is defined by an annular ring 58. The annular ring 58 is attached, by spin welding, to an upper edge 60 of the body wall 20. The housing outlet 16 is connected to a soil pipe 32 and secured in place by compression of a seal element 34 by an outlet nut 36.

The housing 12 further comprises an inlet grill 38, to cover the housing inlet 14, and a trap insert 40. The insert 40 comprises a rigid tubular portion 42 and a rigid cup 44. The insert 40 defines the water seal by the provision of a convoluted flow path, indicated by a broken line marked "A", and forms the water seal indicated by a body of water 46 between the housing inlet 14 and the housing outlet 16.

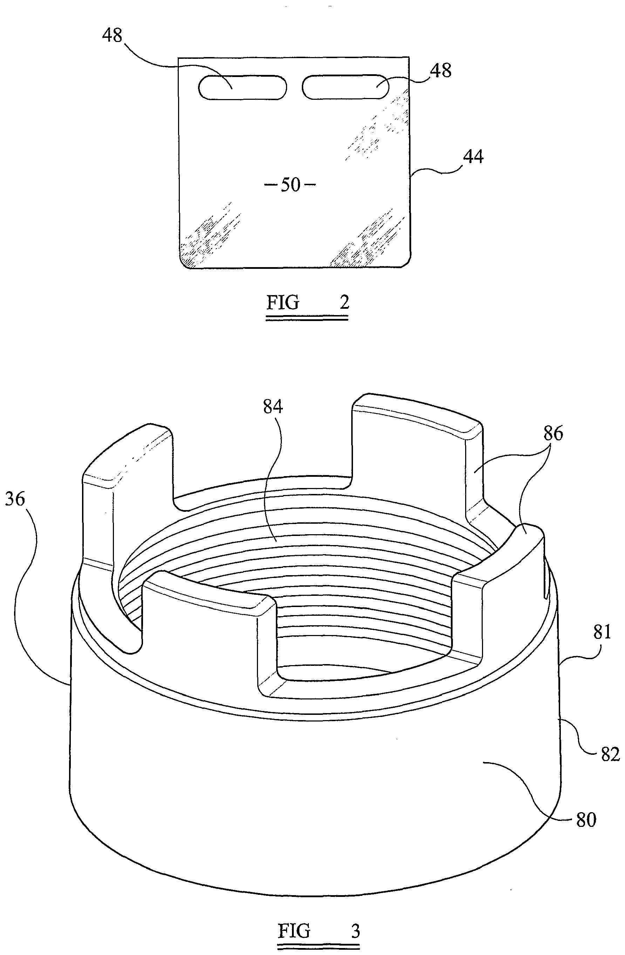

As the shower is used, water in the shower tray 28 flows through the inlet grill 38 and fills up the tubular portion 42 and the cup 44. Once the cup 44 is full, the waste water flows out of the cup 44 through a number of apertures 48 defined by a cup wall 50. The cup 44 is also shown in Figure 2, a side view of the cup 44 of Figure 1. In this Figure, the apertures 48 defined by the cup wall 50 can be seen more clearly.

The insert 40 is arranged to be removable through the housing inlet 14 without deformation. This facilitates cleaning of the trap 10. As can be seen from Figure 1, the insert 40 is arranged to be in contact with the internal surface 52 of the threaded sleeve 22. The tubular portion 42 is sealed against the sleeve internal surface 52 by means of an o-ring 54 and the cup wall 50 is trapped between the sleeve internal surface 52 and a tubular portion lip 56.

Having the body wall 20 spaced away from the housing inlet surface 24 allows for the cup 44 to have a much greater volume than would be possible if the body wall 20 and the housing inlet surface 24 were in line, that is, if the distance "X" was 0 millimetres.

As can also be seen from Figure 1, because the body wall 20 is spaced away from the inlet surface 24, the sleeve 22 can, as the shower base 28 is compressed against the seal 30, extend below the inlet bottom edge 98, and particularly below the last turn 62 of the inlet thread 64 into the body 18 itself. Such an arrangement means the inlet thread 64 can comprise a small number of turns, five in this case, making it easier to screw the sleeve 22 in and out of the inlet 14. If the body wall 20 and the inlet surface 24 were in line, the inlet thread 64 would have to extend as many turns as was necessary to accommodate the entire sleeve thread 66. Such an arrangement would also then reduce the maximum size of the outlet 16 achievable because there would be less body wall 20 space available below the last turn of the inlet thread 64 to accommodate the outlet 16.

As can be seen from Figure 1, because the body wall 20 is spaced away from the inlet surface 24, the outlet 16 can be a larger diameter and, could extend up to the level indicated by letter "B" which is immediately adjacent the annular ring 58, and potentially higher than the bottom edge of the sleeve 22 (if the sleeve 22 was screwed into the inlet 14 further than it is in Figure 1).

Current trends are to reduce the amount of space available between the underside 70 of the shower tray 28 and the floor 72 upon which the shower sits. This provides a further problem for the installer of the shower as the outlet nut 36 needs to be rotated into engagement with an outlet thread 74 to compress the seal element 34 against the soil pipe 32 to secure the soil pipe 32 with respect to the trap 10. If the space between the shower tray 28 and the floor 72 is too small then the shower installer will not be able to get a tool in to secure the nut 36. This problem is exacerbated by maximising the trap outlet 16 to increase trap 10 throughput.

This problem is solved by the use of a castellated nut 36 which is best seen in perspective view in Figure 3. As can be seen from Figure 3, the nut 36 defines a tubular body 80 having a cylindrical external surface 82 and a threaded internal surface 84. From one end of the tubular body 80 extends four castellations 86 which a user can grip to rotate the nut 36 to make it travel along the outlet thread 74. The castellations 86 are spaced apart such that a user's fingers can fit in the gap between each castellation 86. As the castellations 86 do not extend radially beyond the nut external surface 82, the maximum diameter of the nut 36 is minimised, allowing it to fit in tighter spaces but still permitting it to be manipulated using the castellations 86.

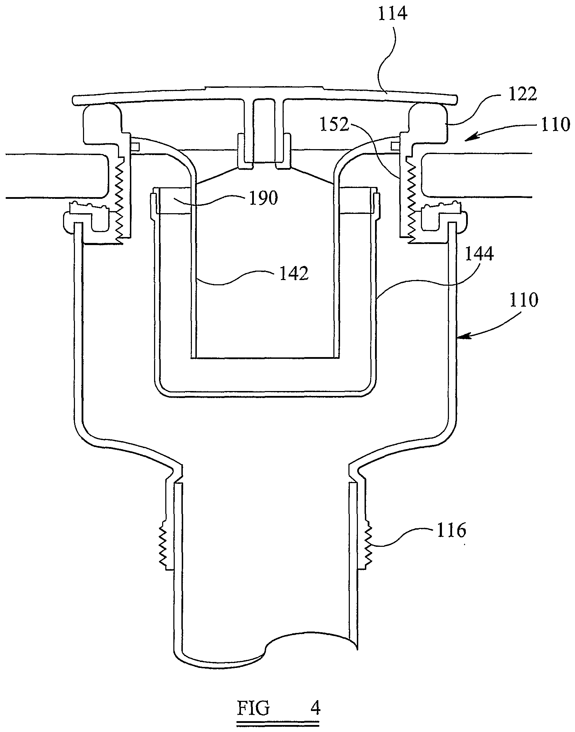

Reference is now made to Figure 4 which shows a section view through a trap 110 according to a second embodiment not forming part of the invention. This trap 110 is largely of similar construction to the trap 10 of the first embodiment, however, it will be noted that a smaller cup 144 has been utilised, the cup 144 being spaced away from the sleeve internal surface 152 such that water can flow between the cup 144 and the sleeve 122. This arrangement simplifies the design of the cup 144 as the apertures 48 of the first embodiment are not required. The cup 144 is secured to the tubular portion 142 by ribs 190.

In this embodiment it will also be seen that the trap outlet 116 is directly below the trap inlet 114.

Various modifications and improvements may be made to the above described first embodiment without departing from the scope of the present invention. For example although the lower edge of the trap outlet is shown spaced from the floor 72, this gap can be reduced such that the nut external surface 82 brushes the floor as it is rotated.

## Claims

1. A waste trap, the waste trap comprising:
a housing (12) having an inlet (14), an outlet (16) and a body (18), the body (18) having at least one wall (20); and
a threaded sleeve (22), the sleeve (22) being threadedly engageable with a housing inlet surface (24) defining a thread, the sleeve (22) having a flange (26), the flange (26) and the housing (12) being arranged, in use, to receive a bath or shower outlet therebetween;
wherein the at least one body wall (20) is spaced away from the housing inlet (14) for permitting the at least one body wall (20) to be offset from the housing inlet (14), **characterized in that** the trap further comprises an insert (40) defining a convoluted flow path configured to allow, in use, the formation of a water seal between the inlet (14) and the outlet (16), the insert (40) being removable through the housing inlet (14),
wherein the insert (40) comprises an inner tubular portion (42) and an outer tubular portion (44) in contact with an internal surface of the sleeve (22), the outer tubular portion (44) defining at least one opening for permitting waste water to exit the insert (40), the tubular portions being arranged concentrically for providing the water seal between the tubular portions, wherein the outer tubular portion rests on a bottom surface of the body.

2. The waste trap (10) of claim 1, wherein the entire housing inlet surface (24) is threaded.

3. The waste trap (10) of any proceeding claim, wherein the housing inlet (14) is defined by an annular ring (58), the annular ring (58) being connected to a top surface of the housing body (18) by spin welding, adhesive, a clip fit or an interference fit.

4. The waste trap (10) of any preceding claim, wherein the housing inlet (14) is adapted to receive a filter device.

5. The waste trap (10) of any preceding claim, wherein the housing outlet (16) is defined by the housing body (18).

6. The waste trap (10) of any preceding claim, wherein both tubular portions are adapted to be removed through the inlet.

7. The waste trap (10) of any preceding claim, wherein the outer tubular portion is trapped between the inner tubular portion and the internal surface (52) of the sleeve (22).

8. The waste trap (10) of claim 7, wherein the insert (40) is at least one of: releasably and sealingly attachable to the internal surface (52) of the sleeve (22).

9. The waste trap (10) of any preceding claim, the at least one opening being at least one of: aperture(s) (48) and castellation(s) (86).

10. The waste trap (10) of any preceding claim, wherein the at least one opening is defined by an upper portion of the outer tubular portion such that, in use, when the level of waste fluid reaches the opening the waste fluid can flow through the at least one opening and towards an exit of the housing body.

11. The waste trap (10) of any preceding claim, wherein the insert (40) comprises a cup (44), the cup having a wall (50), the wall (50) defining the outer tubular portion, the cup (44) being suspended from the sleeve (22).

12. The waste trap (10) of claim 11, wherein a base of the cup rests on the bottom surface of the body.

13. The waste trap (10) of any preceding claim, wherein the housing inlet surface (24) defines a maximum inlet diameter and a portion of the housing body (18) defines a body diameter, the maximum inlet diameter being less than the body diameter.

## Patentansprüche

1. Siphon, wobei der Siphon Folgendes beinhaltet:
ein Gehäuse (12), welches einen Einlass (14), einen Auslass (16) und einen Körper (18) besitzt, wobei der Körper (18) mindestens eine Wand (20) besitzt; und
eine Hülse mit Gewinde (22), wobei die Hülse (22) in Schraubeingriff mit einer Gehäuseeinlassfläche (24) gehen kann, welche ein Gewinde definiert, wobei die Hülse (22) einen Flansch (26) besitzt, wobei der Flansch (26) und das Gehäuse (12) angeordnet sind, im Gebrauch, um einen Bad- oder Duschauslass dazwischen aufzunehmen;
wobei die mindestens eine Körperwand (20) vom Gehäuseeinlass (14) entfernt ist, um die mindestens eine Körperwand (20) in die Lage zu versetzen, von dem Gehäuseeinlass (14) versetzt zu sein, **dadurch gekennzeichnet, dass**
der Siphon zudem einen Einsatz (40) beinhaltet, welcher einen gewundenen Strömungsweg definiert, welcher konfiguriert ist, um im Gebrauch die Bildung eines Wasserverschlusses zwischen dem Einlass (14) und dem Auslass (16) zu ermöglichen, wobei der Einsatz (40) durch den Gehäuseeinlass (14) entfernt werden kann,
wobei der Einlass (40) einen inneren röhrenförmigen Abschnitt (42) und einen äußeren röhrenförmigen Abschnitt (44) in Kontakt mit einer Innenfläche der Hülse (22) beinhaltet, wobei der äußere röhrenförmige Abschnitt (44) mindestens eine Öffnung definiert, um zu ermöglichen, dass Abwasser den Einsatz (40) verlässt, wobei die röhrenförmigen Abschnitte konzentrisch angeordnet sind, um den Wasserverschluss zwischen den röhrenförmigen Abschnitten bereitzustellen, wobei der äußere röhrenförmige Abschnitt auf einer Bodenfläche des Körpers ruht.

2. Siphon (10) nach Anspruch 1, bei welchem die gesamte Gehäuseeinlassfläche (24) mit Gewinde versehen ist.

3. Siphon (10) nach einem der vorhergehenden Ansprüche, bei welchem der Gehäuseeinlass (14) durch einen ringförmigen Ring (58) definiert ist, wobei der ringförmige Ring (58) mit einer oberen Fläche des Gehäusekörpers (18) durch Rotationsschweißen, Kleber, eine Clip-Passung oder eine Press-Passung verbunden ist.

4. Siphon (10) nach einem der vorhergehenden Ansprüche, bei welchem der Gehäuseeinlass (14) geeignet ist, eine Filtervorrichtung aufzunehmen.

5. Siphon (10) nach einem der vorhergehenden Ansprüche, bei welchem der Gehäuseauslass (16) durch den Gehäusekörper (18) definiert wird.

6. Siphon (10) nach einem der vorhergehenden Ansprüche, bei welchem beide röhrenförmigen Abschnitte geeignet sind, durch den Einlass entfernt zu werden.

7. Siphon (10) nach einem der vorhergehenden Ansprüche, bei welchem der äußere röhrenförmige Abschnitt zwischen dem inneren röhrenförmigen Abschnitt und der Innenfläche (52) der Hülse (22) eingeschlossen ist.

8. Siphon (10) nach Anspruch 7, bei welchem der Einsatz (40) mindestens eine der folgenden Eigenschaften besitzt: Fähigkeit zur lösbaren und Fähigkeit zur dichtenden Befestigung an der Innenfläche (52) der Hülse (22).

9. Siphon (10) nach einem der vorhergehenden Ansprüche, bei welchem die mindestens eine Öffnung mindestens eines der folgenden Elemente ist: Öffnung(en) (48) und Zinnenstruktur(en) (86).

10. Siphon (10) nach einem der vorhergehenden Ansprüche, bei welchem die mindestens eine Öffnung durch einen oberen Abschnitt des äußeren röhrenförmigen Abschnittes in der Weise definiert ist, dass, im Gebrauch, wenn der Abfallfluidpegel die Öffnung erreicht, das Abfallfluid durch die mindestens eine Öffnung und in Richtung eines Ausgangs des Gehäusekörpers strömen kann.

11. Siphon (10) nach einem der vorhergehenden Ansprüche, bei welchem der Einsatz (40) eine Schale (44) beinhaltet, wobei die Schale eine Wand (50) besitzt, wobei die Wand (50) den äußeren röhrenförmigen Abschnitt definiert, wobei die Schale (44) an der Hülse (22) aufgehängt ist.

12. Siphon (10) nach Anspruch 11, bei welchem eine Basis der Schale auf der Bodenfläche des Körpers ruht.

13. Siphon (10) nach einem der vorhergehenden Ansprüche, bei welchem die Gehäuseeinlassfläche (24) einen maximalen Einlassdurchmesser definiert und ein Abschnitt des Gehäusekörpers (18) einen Körperdurchmesser definiert, wobei der maximale Einlassdurchmesser geringer als der Körperdurchmesser ist.

## Revendications

1. Siphon, le siphon comprenant :
un logement (12) présentant une entrée (14), une sortie (16) et un corps (18), le corps (18) présentant au moins une paroi (20) ; et
un manchon fileté (22), le manchon (22) pouvant être mis en prise par filetage avec une surface d'entrée de logement (24) définissant un filet, le manchon (22) présentant une bride (26), la bride (26) et le logement (12) étant agencés, en cours d'utilisation, afin de recevoir une sortie de bain ou de douche entre eux ;
dans lequel ladite au moins une paroi de corps (20) est espacée de l'entrée de logement (14) afin de permettre à ladite au moins une paroi de corps (20) d'être décalée de l'entrée de logement (14), **caractérisé en ce que**
le siphon comprend en outre un insert (40) définissant un chemin d'écoulement alambiqué configuré afin de permettre, en cours d'utilisation, la formation d'un joint d'eau entre l'entrée (14) et la sortie (16), l'insert (40) pouvant être enlevé à travers l'entrée de logement (14),
dans lequel l'insert (40) comprend une partie tubulaire interne (42) et une partie tubulaire externe (44) en contact avec une surface interne du manchon (22), la partie tubulaire externe (44) définissant au moins une ouverture afin de permettre la sortie des eaux usées de l'insert (40), les parties tubulaires étant agencées de manière concentrique afin de fournir le joint d'eau entre les parties tubulaires, dans lequel la partie tubulaire extérieure s'appuie sur une surface inférieure du corps.

2. Siphon (10) selon la revendication 1, dans lequel toute la surface d'entrée du logement (24) est filetée.

3. Siphon (10) selon l'une quelconque des revendications précédentes, dans lequel l'entrée de logement (14) est définie par une bague annulaire (58), la bague annulaire (58) étant raccordée à une surface supérieure du corps de logement (18) par un soudage rotatif, un adhésif, un ajustage par clip ou un ajustage par interférence.

4. Siphon (10) selon l'une quelconque des revendications précédentes, dans lequel l'entrée de logement (14) est conçue afin de recevoir un dispositif de filtre.

5. Siphon (10) selon l'une quelconque des revendications précédentes, dans lequel la sortie de logement (16) est définie par le corps du logement (18).

6. Siphon (10) selon l'une quelconque des revendications précédentes, dans lequel les deux parties tubulaires sont conçues afin d'être enlevées à travers l'entrée.

7. Siphon (10) selon l'une quelconque des revendications précédentes, dans lequel la partie tubulaire extérieure est piégée entre la partie tubulaire interne et la surface interne (52) du manchon (22).

8. Siphon (10) selon la revendication 7, dans lequel l'insert (40) est au moins un parmi un insert pouvant être fixé de manière amovible et un insert étanche à la surface interne (52) du manchon (22).

9. Siphon (10) selon l'une quelconque des revendications précédentes, ladite au moins une ouverture étant au moins une parmi : une/des ouverture(s) (48) et un/des créneau(x) (86).

10. Siphon (10) selon l'une quelconque des revendications précédentes, dans lequel ladite au moins une ouverture est définie par une partie supérieure de la partie tubulaire extérieure de sorte que, en cours d'utilisation, lorsque le niveau de fluide usé atteint l'ouverture, le fluide usé peut s'écouler à travers ladite au moins une ouverture et vers une sortie du corps de logement.

11. Siphon (10) selon l'une quelconque des revendications précédentes, dans lequel l'insert (40) comprend un godet (44), le godet présentant une paroi (50), la paroi (50) définissant la partie tubulaire extérieure, le godet (44) étant suspendu par rapport au manchon (22).

12. Siphon (10) selon la revendication 11, dans lequel une base du godet s'appuie sur la surface inférieure du corps.

13. Siphon (10) selon l'une quelconque des revendications précédentes, dans lequel la surface d'entrée du logement (24) définit un diamètre d'entrée maximum et une partie du corps de logement (18) définit un diamètre de corps, le diamètre d'entrée maximum étant inférieur au diamètre de corps.
